# EUROPÄISCHE PATENTSCHRIFT

(11) **EP 3 712 385 B1**
(45) Veröffentlichungstag und Bekanntmachung des Hinweises auf die Patenterteilung: **22.06.2022**
(21) Anmeldenummer: 20150955.1
(22) Anmeldetag: 09.01.2020
(51) Int. Cl.: F01D 11/04, F04D 29/12, F02C 6/12, F04D 29/10, F16J 15/34, F16J 15/40

(54) **TURBOMASCHINE UND VERFAHREN ZUM BETRIEB EINER TURBOMASCHINE**
TURBOMACHINE AND METHOD FOR OPERATING A TURBOMACHINE
TURBOMACHINE ET PROCÉDÉ POUR EXPLOITER UNE TURBOMACHINE

(30) Priorität: 22.03.2019 DE 102019107454
(43) Veröffentlichungstag der Anmeldung: 23.09.2020
(73) Patentinhaber: ATLAS COPCO ENERGAS GMBH, 50999 Köln (DE)
(72) Erfinder: Wiebe, Frank, 41542 Dormagen-Gohr (DE); Tiefenthal, Marcus, 51145 Köln (DE)
(74) Vertreter: Andrejewski - Honke Patent- und Rechtsanwälte Partnerschaft mbB

(56) Entgegenhaltungen:
- WO-A1-2017/017227
- US-A1- 2002 197 154
- US-A1- 2010 254 811
- US-A1- 2013 106 062

## Beschreibung

Die Erfindung betrifft eine Turbomaschine mit einem Gehäuse und einem in dem Gehäuse um eine Drehachse drehbar gelagerten Rotor, welcher eine Turbostufe mit einer Hochdruckseite und einer Niederdruckseite umfasst. Zwischen der Hochdruckseite und einem im Gehäuseinnenraum ist eine Trockengasdichtung angeordnet, welche eine Spülkammer mit einer der Hochdruckseite zugewandten inneren Dichtung und einer der Hochdruckseite abgewandten äußeren Dichtung aufweist. Zwischen der Trockengasdichtung und der Hochdruckseite ist ferner eine Zwischenkammer angeordnet, welche von der Hochdruckseite durch eine Zwischendichtung getrennt ist. Die Zwischengasdichtung weist eine in einem ersten Radius um die Drehachse angeordnete erste Dichtfläche auf. Die innere Dichtung weist eine in einem zweiten Radius um die Drehachse angeordnete zweite Dichtfläche auf und die äußere Dichtung weist eine in einem dritten Radius um die Drehachse angeordnete dritte Dichtfläche auf.

Derartige gattungsgemäße Dichtungsanordnungen mit einer Zwischenkammer sind bei Turbomaschinen bekannt, um den Druckabfall zwischen der Spülkammer und der Hochdruckseite an der inneren Dichtung zu reduzieren. Eine solche Anordnung ist beispielsweise in US 7 252 474 B2 offenbart.

Eine weitere gattungsgemäße Turbomaschine ist aus US 2010/0 254 811 A1 bekannt.

Bei gattungsgemäßen Turbomaschinen, insbesondere mit einer fliegend an einem Wellenende angeordneten Turbostufe, besteht immer das Problem des axialen Lastausgleiches. Je nach Betriebszustand übt das durch die Turbostufe strömende Prozessmedium (Prozessgas) statische und dynamische Kräfte aus, welche entlang der Drehachse (axial) wirken. Diese müssen durch entsprechende axiale Lager aufgefangen werden.

Zusammenfassung der Erfindung. Vor diesem Hintergrund liegt bei der Erfindung die Aufgabe zugrunde, bei einer gattungsgemäßen Turbomaschine den Axiallastausgleich zu verbessern. Hierdurch kann die Auslegung der Axiallager reduziert und somit Kosten und Bauraum eingespart werden.

Gegenstand der Erfindung und Lösung dieser Aufgabe ist eine Turbomaschine nach Patentanspruch 1 sowie ein Verfahren zum Betrieb einer Turbomaschine nach Patentanspruch 8. Bevorzugte Ausgestaltungen sind in den abhängigen Unteransprüchen angegeben.

Die Turbomaschine ist mit einem Gehäuse und einem in dem Gehäuse um eine Drehachse drehbar gelagerten Rotor ausgestattet, welcher eine Turbostufe mit einer Hochdruckseite und einer Niederdruckseite umfasst. Zwischen der Hochdruckseite und einem im Gehäuseinnenraum ist eine Trockengasdichtung angeordnet, welche eine Spülkammer mit einer der Hochdruckseite zugewandten inneren Dichtung und einer der Hochdruckseite abgewandten äußeren Dichtung aufweist. Zwischen der Trockengasdichtung und der Hochdruckseite ist ferner eine Zwischenkammer angeordnet, welche von der Hochdruckseite durch eine Zwischendichtung getrennt ist. Die Zwischendichtung weist eine in einem ersten Radius um die Drehachse angeordnete erste Dichtfläche auf, die innere Dichtung weist eine in einem zweiten Radius um die Drehachse angeordnete zweite Dichtfläche auf und die äußere Dichtung weist eine in einem dritten Radius um die Drehachse angeordnete dritte Dichtfläche wobei der erste Radius kleiner als der zweite Radius und/oder der dritte Radius ist.

Aufgrund der erfindungsgemäßen Anordnung der Dichtungen ergeben sich bei der Turbomaschine am Übergang vom Gehäuseinnenraum zur Hochdruckseite der Turbostufe mehrere, abgestufte Druckniveaus. Den geringsten Absolutdruck weist dabei der Gehäuseinnenraum auf. Dieser kann insbesondere unter atmosphärischem Druck stehen. Der höchste Druck liegt auf der Hochdruckseite der Turbostufe vor. Die Absolutdrücke der Zwischenkammer sowie der Spülkammer liegen insbesondere zwischen dem Druck der Hochdruckseite und dem Gehäuseinnendruck.

An den Druckstufen kann es aufgrund des Differenzdrucks zu axialen Schubmomenten kommen. Diese sind bei Wellendichtungen wesentlich von den effektiven Radien der Dichtflächen abhängig. Dies wird im Allgemeinen auch als Kolbeneffekt bezeichnet.

Der für die Zwischendichtung ausschlaggebende erste Radius ist kleiner als der Radius der inneren und der äußeren Dichtung. Hierdurch wird das erzeugte axiale Moment an dem Übergang zwischen der Hochruckseite und der Zwischenkammer reduziert. In der Folge treten im Betrieb geringere statische Axialkräfte an dieser Druckstufe auf. Überdies können auch dynamische Axialkräfte infolge von Druckschwankungen im Betrieb leichter abgefangen werden.

Die Erfindung ist nicht auf Ausgestaltungen beschränkt, bei denen die erste, zweite und dritte Dichtfläche zylindersymmetrisch ausgebildet sind. Insbesondere können die Dichtflächen auch konisch ausgebildet oder senkrecht zur Drehachse ausgerichtet sein. Auch unregelmäßig geformte Dichtflächen, insbesondere Labyrinthdichtungen sind möglich.

In einer bevorzugten Ausgestaltung ist die Zwischenkammer durch eine Druckausgleichsleitung mit der Niederdruckseite verbunden. Somit wird das Druckniveau der Zwischenkammer auf das der Niederdruckseite abgesenkt. Im Betrieb wird die Trockengasdichtung beständig mit einem Spülgas beaufschlagt, so dass kein Prozessgas aus der Turbostufe entweichen kann. Stattdessen tritt das Spülgas beständig durch die innere Dichtung in Richtung der Turbostufe über. Hierzu muss die Spülkammer gegenüber der anschließenden Prozessgasseite einen Überdruck aufweisen. Gegenüber einer direkten Verbindung zur Hochdruckseite ergibt sich bei einer druckabgesenkten Zwischenkammer der Vorteil, dass der Absolutdruck der Spülkammer geringer ausgebildet sein kann. Dieser muss lediglich einen Überdruck gegenüber der Niederdruckseite aufweisen. Aufgrund des geringeren Innendrucks in der Spülkammer werden auch die Leckageverluste in Richtung des Gehäuseinnenraumes über die äußere Dichtung signifikant reduziert. Das an der Zwischendichtung von der Hochdruckseite in Richtung der Zwischenkammer übertretende Prozessgas kann durch die Drückausgleichsleitung zur Niederdruckseite zurückgeführt und dort wieder mit dem übrigen Prozessgas vereint werden.

Erfindungsgemäß ist der zweite Radius größer ausgebildet als der dritte Radius. Hierdurch wird infolge des Kolbeneffektes an der Spülkammer ein axiales Schubmoment hervorgerufen, welches dem an der Zwischendichtung auftretenden Schubmoment entgegensteht. Der Überdruck der Spülkammer kann somit zumindest zur teilweisen Kompensation dieses Schubmoments genutzt werden.

Besonders bevorzugt herrscht in der Spülkammer gegenüber der Zwischenkammer ein Überdruck, insbesondere von zumindest 0,5 bar. Durch den Überdruck der Spülkammer wird ein Austreten des Prozessgases aus der Turbostufe sicher verhindert.

In einer besonders bevorzugten Ausgestaltung ist der Überdruck der Spülkammer gegenüber der Zwischenkammer im Betrieb einstellbar. Durch Einstellung des Überdrucks der Spülkammer gegenüber der Zwischenkammer kann das an der inneren Dichtung anfallende axiale Schubmoment aufgrund des Kolbeneffekts variiert werden. Dies kann zur statischen und/oder dynamischen Entlastung der Axiallager genutzt werden.

Vorzugsweise werden der Innendruck der Spülkammer und der Innendruck der Zwischenkammer im Betrieb fortwährend mittels einer Zwischenkammersensoreinheit und einer Spülkammersensoreinheit erfasst. Die davon aufgezeichneten Messsignale werden einer Steuereinheit zugeleitet, welche den Zufluss von Spülgas in die Spülkammer derart steuert, dass der beabsichtigte Überdruck erreicht wird. Alternativ oder zusätzlich kann der Überdruck auch mittels eines mechanischen Überdruckreglers eingestellt werden.

Besonders bevorzugt wird der Überdruck der Spülkammer gegenüber der Zwischenkammer im Betrieb variabel und in Abhängigkeit von der Betriebssituation eingestellt, um den notwendigen Axialschubausgleich zu gewährleisten.

Gemäß einer bevorzugten Ausgestaltung der Erfindung weist der Rotor eine Welle und einen mit der Welle verbundenes und die Turbostufe bildendes Turbolaufrad auf. Insbesondere kann das Turbolaufrad als Radiallaufrad ausgebildet sein. Bei Radiallaufrädern treten regelmäßig hohe dynamische axiale Schubmomente auf, da der Strom des Prozessmediums von einer radialen in eine axiale Richtung bzw. umgekehrt umgeleitet wird. Infolgedessen kommt dem Axialschubausgleich eine besonders hohe Bedeutung zu.

Gemäß einer besonders bevorzugten Ausführungsform ist das Turbolaufrad fliegend an einem Ende der Welle angeordnet. Die fliegende Anordnung der Turbostufe am Ende der Welle führt zu besonders großen axialen Schubmomenten an der Hochdruckseite, so dass die erfindungsgemäße Achsschubkompensation besonders vorteilhaft eingesetzt werden kann.

Besonders bevorzugt ist an beiden Enden der Welle jeweils eine Turbostufe einer mehrstufigen Turbomaschine angeordnet. Somit kompensieren sich die axialen Schubkräfte bereits ohne zusätzliche Abstützung oder Regelung in einem gewissen Bereich. Besonders vorzugsweise ist zwischen jeder der beiden Turbostufen und dem dazwischenliegenden Gehäuseinneren eine Trockengasdichtung sowie eine Zwischenkammer angeordnet. Durch den optional und unabhängig voneinander einstellbaren Überdruck der Spülkammern an beiden Enden der Welle kann somit der axiale Schub noch besser und in beiden Richtungen austariert werden.

In einer ganz besonders bevorzugten Ausgestaltung werden die axialen Schubmomente vollständig durch die Überdruckregelungen an beiden Wellenenden aufgefangen. In diesem Fall kann auf dezidierte Axiallager - zumindest für den Regelbetrieb - verzichtet werden. Hiervon unbenommen sind etwaige Notlauflager.

Zweckmäßigerweise ist die Spülkammer an eine Spülgasleitung angeschlossen. Mit der Spülgasleitung wird der Spülkammer beständig ein Spülgas zugeführt. Somit kann ein Entweichen die Turbostufe durchströmenden Prozessmediums in den Gehäuseinnenraum oder aus der Turbomaschine heraus verhindert werden. Bei dem Spülgas handelt es sich insbesondere um ein Inertgas wie Stickstoff oder ein Edelgas. Dieses ist vorteilhafterweise technisch rein und wasserfrei.

Die erfindungsgemäße Dichtungsanordnung ist insbesondere für Hochdruckturbostufen vorteilhaft einsetzbar. Hierbei herrscht an der Niederdruckseite der Turbostufe gegenüber dem Gehäuseinnenraum ein Überdruck von zumindest 50 bar.

Ein weiteres bevorzugtes Anwendungsgebiet der Erfindung liegt in Turbostufen mit einem hohen Differenzdruck. Insbesondere herrscht zwischen der Niederdruckseite und der Hochdruckseite der Turbostufe eine Druckdifferenz von zumindest 50 bar.

Bei der Turbostufe kann es sich ohne Beschränkung der Erfindung um eine Turbopumpe, einen Turbokompressor, aber auch ein Turboexpander bzw. eine Turbine handeln. Auch freilaufende einwellige Anordnungen mit zumindest einer Kompressorstufe und einer Expanderstufe (Kompander) sowie an- bzw. abgetriebene Kompander eignen sich für die vorliegende Erfindung.

Die innere Dichtung und/oder die Zusatzdichtung sind vorzugsweise als Labyrinth- bzw. Kammdichtungen ausgeführt. Aufgrund der Konstruktion der Dichtungsanordnung sind an beiden Dichtungen geringe Leckageraten akzeptabel. Gleichzeitig sind die geringen Reibungswerte dieser Dichtung besonders vorteilhaft bei hohen Drehzahlen.

Gemäß einer bevorzugten Variante der Erfindung ist die äußere Dichtung als Gleitringdichtung ausgebildet. Diese weist zwar gegenüber einer Labyrinthdichtung einen erhöhten Reibwert auf führt jedoch gleichzeitig zu einer lediglich vernachlässigbaren Leckage des Spülgases aus der Spülkammer in das Gehäuseinnere. Hierdurch kann ein übermäßiger Verbrauch des Spülgases vermieden werden.

Gegenstand der Erfindung ist auch ein Verfahren zum Betrieb einer Turbomaschine, wie sie zuvor beschrieben ist. Erfindungsgemäß wird die Spülkammer mit einem Spülgasstrom beaufschlagt, so dass sich zu der Zwischenkammer ein Überdruck von zumindest 0,5 bar einstellt. Somit wird ein Spülgasstrom aus der Spülkammer in Richtung der Zwischenkammer induziert.

Besonders bevorzugt wird der Überdruck der Spülgaskammer in Betrieb zum axialen Lastausgleich eingestellt. Aufgrund der unterschiedlichen Radien der Zusatzdichtung, der inneren Dichtung und der äußeren Dichtung ergeben sich durch den "Kolbeneffekt" unterschiedliche axiale Kräfte in Abhängigkeit von dem in den unterschiedlichen Druckbereichen herrschenden Druckverhältnisse. Insbesondere der Überdruck der Spülkammer zur Zwischenkammer kann dabei zur Einstellung eines axialen Lastausgleichs genutzt werden.

Vorzugsweise ist dazu eine Steuereinheit vorgesehen, welche den zwischen der Spülkammer und der Zwischenkammer herrschenden Überdruck in Abhängigkeit von weiteren Betriebsparametern vorgibt. Die Regelung des Überdrucks kann hiervon separat mechanisch, elektromechanisch oder vollelektronisch erfolgen. Ebenso kann die Druckregelung der Spülkammer in die Steuereinheit integriert sein.

Die zur Berechnung des vorgegebenen Überdrucks verwendeten Betriebsparameter können insbesondere die axiale Position des Rotors und/oder Steuerparameter eines aktiven Axiallagers umfassen. So kann beispielsweise ein aktives magnetisches Axiallager durch entsprechende Anpassung des Überdrucks entlastet werden, so dass geringere magnetische Kräfte und infolge dessen geringere elektrische Ströme benötigt werden.

Der vorgegebene Überdruck ist insbesondere in einem Bereich einstellbar. Dieser Bereich beträgt vorzugsweise 0,5 bis 10 bar. Bei höheren Überdrücken würden die Lackageraten an der äußeren Dichtung in unakzeptabler Weise ansteigen.

In einer besonders bevorzugten Ausgestaltung des erfindungsgemäßen Verfahrens wird der Innendruck der Zwischenkammer an das Niveau der Niederdruckseite angeglichen. Dies kann beispielsweise durch eine Druckentlastungsleitung geschehen, welche die Zwischenkammer mit der Niederdruckseite verbindet. Alternativ oder zusätzlich kann auch eine aktive Druckregelung vorgesehen sein, welche ohne eine Verbindung mit der Niederdruckseite auskommt. Dies kann insbesondere dann von Interesse sein, wenn eine Kontamination des Prozessgases mit dem Spülgas verhindert werden soll. In diesem Fall wird das in der Zwischenkammer bestehende Gemisch aus dem Prozessgas und dem Spülgas abgeführt und aus dem Prozess ausgeschleust. Hieran kann eine Separierung und Aufbereitung des Gases anschließen.

Die Erfindung wird nachfolgend anhand von lediglich ein Ausführungsbeispiel darstellenden Zeichnungen erläutert. Es zeigen dabei schematisch
- Fig. 1: eine schematische Schnittdarstellung einer erfindungsgemäßen Turbomaschine und
- Fig. 2: eine Detailansicht aus Fig. 1.

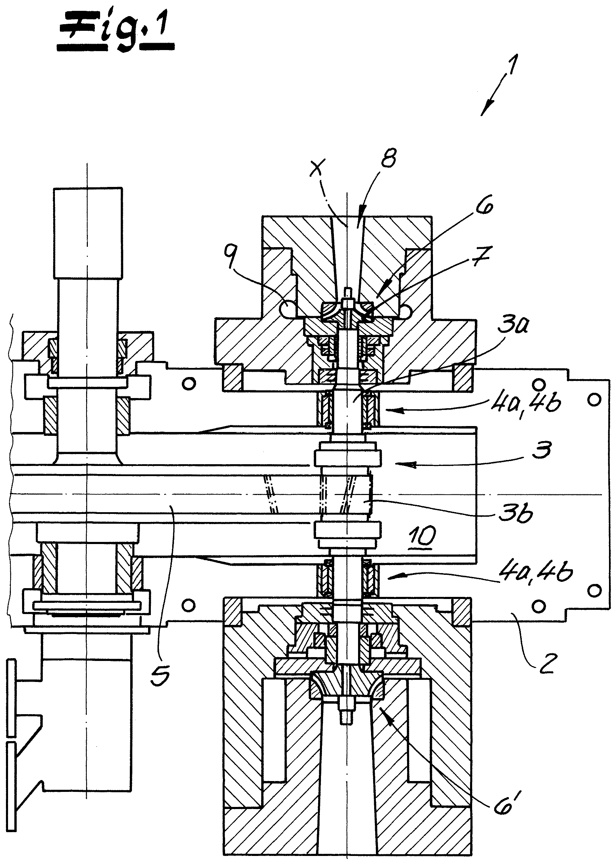

Die Fig. 1 zeigt eine stark vereinfachte Schnittdarstellung durch eine erfindungsgemäße Turbomaschine 1. Im dargestellten Ausführungsbeispiel handelt es sich bei der Turbomaschine 1 um einen Getriebekompressor mit einem in einem Gehäuse 2 der Turbomaschine 1 um eine Drehachse x drehbar gelagerten Rotor 3. Der Rotor 3 umfasst eine Welle 3a, welche mittels Radiallagern 4a und Axiallagern 4b an dem Gehäuse gehalten ist. Ferner ist an der Welle 3a ein Ritzel 3b angeordnet, welches mittels eines Großrades 5 angetrieben wird.

Die Erfindung ist auch bei anderen Turbomaschinen, wie Turboexpandern sowie bei antreibbaren und freilaufenden Kompandern anwendbar.

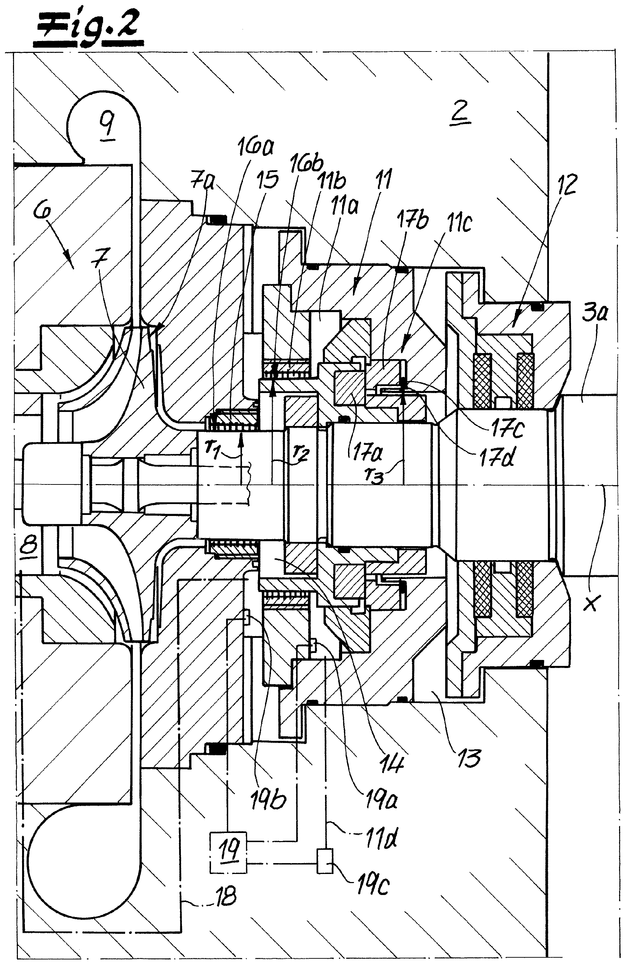

An den beiden Enden der Welle 3a sind eine erste Turbostufe 6 sowie eine zweite Turbostufe 6' fliegend angeordnet. In der Fig. 2 ist ein Ausschnitt mit der ersten Turbostufe 6 dargestellt. Die beiden Turbostufen 6, 6' sind im Ausführungsbeispiel in Reihe angeordnet und bilden somit einen mehrstufigen Turbokompressor.

Die Turbostufe 6 umfasst ein Turbolaufrad 7, welches im Ausführungsbeispiel als Radiallaufrat ausgebildet ist. Das Kompressorlaufrad 7 fördert das Prozessmedium (Prozessgas) im Betrieb von der Niederdruckseite 8 zur Hochdruckseite 9 und erhöht dabei dessen Druck. In dem Zwischenraum zwischen der Rückseite 7a des Laufrades und dem Gehäuse 2 herrschen dabei die Druckverhältnisse der Hochdruckseite 9. Dieser Druck muss gegenüber dem Innenraum 10 des Gehäuses 2, in dem sich das Ritzel 3b sowie das Großrad 5 befinden, abgedichtet werden. Hierdurch wird ein unkontrollierter Austritt des mit der Turbostufe 6 komprimierten Prozessmediums verhindert. Dies ist insbesondere dann wichtig, wenn das Prozessmedium toxisch, korrosiv oder in sonstiger Weise umwelt- bzw. gesundheitsgefährdend ist. Der Gehäuseinnenraum 10 weist üblicherweise Atmosphärendruck auf. Insbesondere bei hochkomprimierenden Turbostufen ist die Auslegung der Dichtung aufwendig.

Hierzu ist im Rahmen der Erfindung zwischen der Hochdruckseite 9 und im Gehäuseinnenraum 10 eine Trockengasdichtung 11 angeordnet, welche eine Spülkammer 11a mit einer der Hochdruckseite 9 zugewandten inneren Dichtung 11b und einer der Hochdruckseite 9 abgewandten äußeren Dichtung 11c aufweist. Die äußere Dichtung 11c bildet dabei den Abschluss der Trockengasdichtung 11 in Richtung des Gehäuseinnenraumes 10. Zwischen der Trockengasdichtung 11 und dem Gehäuseinnenraum kann optional eine weitere Dichtungsanordnung 12 befinden, so dass sich zwischen der weiteren Dichtungsanordnung 12 und der Trockengasdichtung 11 eine Rückführkammer 13 für das Spülgas gebildet ist.

Zwischen der Trockengasdichtung 11 und der Hochdruckseite 9 ist eine Zwischenkammer 14 angeordnet, welche von der Hochdruckseite 9 durch eine Zwischendichtung 15 getrennt ist. Die Zwischendichtung 15 weist eine in einem ersten Radius r₁ um die Drehachse x angeordnete erste Dichtfläche 16a auf. Die Zusatzdichtung 15 ist als Labyrinthdichtung mit einer zylindersymmetrisch um die Drehachse x angeordneten ersten Dichtfläche 16a und einem zugeordneten, an dem Gehäuse 2 befestigten Kammprofil ausgebildet. Im gezeigten Ausführungsbeispiel wird die erste Dichtfläche 16a durch eine Außenfläche der Welle 3a gebildet.

Die innere Dichtung 11b ist ebenfalls als Labyrinthdichtung mit einem feststehend an dem Gehäuse 2 befestigten Kammprofil ausgebildet. Dieses wechselwirkt mit einer zweiten Dichtfläche 16b, welche im Ausführungsbeispiel zylindersymmetrisch in einem zweiten Radius r₂ um die Drehachse x angeordnet ist.

Erfindungsgemäß ist die äußere Dichtung 11c als Gleitringdichtung mit einem ersten Gleitring 17a und einem zweiten Gleitring 17b ausgebildet. Der erste Gleitring 17a ist fest mit der Welle verbunden und dreht sich mit dieser mit. Der zweite Gleitring 17b ist in Richtung der Drehachse x längsverschieblich an dem Gehäuse 2 gehalten. Zwischen dem zweiten Gleitring 17b und dem Gehäuse 2 ist zur Abdichtung ein Dichtelement 17c vorgesehen, welches an einer zugeordneten Anlagefläche 17d des Gehäuses 2 sowie dem rückwärtigen Ende des zweiten Gleitrings 17b anliegt. Hierdurch wird die axiale Verschieblichkeit des zweiten Gleitrings 17b der äußeren Dichtung 11c gewährleistet. Die Anlagefläche 17d erstreckt sich zylindersymmetrisch um die Drehachse x in einem dritten Radius r₃. Der erste Gleitring 17a liegt an dem zweiten Gleitring 17b an einer Dichtfläche der äußeren Dichtung 11c flächig an. Die Dichtfläche erstreckt sich im Ausfürungsbeispiel in radialer Richtung senkrecht zur Drehachse x. Dabei erstreckt sich die Dichtfläche auch über einen Bereich, welcher durch den dritten Radius r₃ gekennzeichnet ist. Die dritte Dichtfläche zwischen dem ersten Gleitring 17a und dem zweiten Gleitring 17b weist somit ebenfalls den dritten Radius r₃ auf.

Erfindungsgemäß ist vorgesehen, dass der erste Radius r₁ kleiner ist als der zweite Radius r₂ und/oder der dritte Radius r₃. Im Ausführungsbeispiel ist der erste Radius sowohl kleiner als der zweite Radius r₂ als auch der dritte Radius r₃.

Der an einer Druckstufe auftretende Axialschub ist abhängig von der unterhalb des effektiven Radius gebildeten Querschnittsfläche sowie des herrschenden Differenzdrucks. Durch den geringen ersten Radius r₁ wird der von Seiten der Hochdruckstufe herrschende Axialschub signifikant reduziert. Hierdurch kann die Auslegung der Axiallager 4b der Turbomaschine 1 reduziert werden. Auch der dynamische Ausgleich von Druckstößen wird hierdurch vereinfacht.

Zur Herstellung eines Druckausgleichs ist die Zwischenkammer 14 durch eine Druckausgleichsleitung 18 mit der Niederdruckseite 8 der Turbostufe 6 verbunden. Somit muss zur Aufrechterhaltung eines Spülgasstroms die Spürkammer 11a lediglich mit einem Überdruck im Verhältnis zur Zwischenkammer 14 - d. h. zur Niederdruckseite 8 - und nicht zur Hochdruckseite 9 beaufschlagt werden.

Gemäß der gezeigten Ausführungsvariante ist der zweite Radius r₂ größer als der dritte Radius r₃. Somit kann mittels eines in der Spülkammer 11a herrschenden Überdrucks ein Axialschubmoment erzeugt werden, welches dem Axialschub an der Zusatzdichtung 15 entgegengesetzt ist. Hierdurch kann zumindest eine teilweise Achsschubkompensation erreicht werden.

Zur Bereitstellung eines Spülgasstromes in Richtung der Turbostufe 6 ist in der Spülkammer 11a gegenüber der Zwischenkammer 14 ein Überdruck, insbesondere von zumindest 0,5 bar vorgesehen. Hierzu wird die Spülkammer 11a mittels einer Spülgaszuleitung 11d beständig mit einem Spülgas - insbesondere einem Inertgas - versorgt. Der Zufluss des Spülgases wird dabei mittels einer Steuereinheit 19 geregelt, welche mit einer ersten Sensoreinheit 19a den Innendruck der Spülkammer und mittels einer zweiten Sensoreinheit 19b den Innendruck der Zwischenkammer erfasst. Hiervon abhängig wird ein Regelorgan 19c innerhalb der Spülgaszuleitung 11d angesteuert. Der Sollwert des Überdrucks kann dabei an der Steuereinheit 19 im Betrieb laufend eingestellt werden. Insbesondere kann dieser Sollwert an weitere Parameter wie etwa die Positionierung des Rotors 3 entlang der Drehachse x bzw. die Betriebsparameter bzw. Messwerte eines Axiallagers gekoppelt werden.

## Patentansprüche

1. Turbomaschine (1) mit einem Gehäuse (2) und einem in dem Gehäuse (2) um eine Drehachse (x) drehbar gelagerten Rotor (3), welcher eine Turbostufe (6, 6') mit einer Hochdruckseite (9) und einer Niederdruckseite (8) umfasst, mit einer zwischen der Hochdruckseite (9) und einem Gehäuseinnenraum (10) angeordneten Trockengasdichtung (11), welche eine Spülkammer (11a) mit einer der Hochdruckseite (9) zugewandten inneren Dichtung (11b) und einer der Hochdruckseite (9) abgewandten äußeren Dichtung (11c) aufweist, mit einer zwischen der Trockengasdichtung (11) und der Hochdruckseite (9) angeordneten Zwischenkammer (14), welche von der Hochdruckseite (9) durch eine Zwischendichtung (15) getrennt ist, wobei die Zwischendichtung (15) eine in einem ersten Radius (r₁) um die Drehachse (x) angeordnete erste Dichtfläche (16a) aufweist, wobei die innere Dichtung (11b) eine in einem zweiten Radius (r₂) um die Drehachse (x) angeordnete zweite Dichtfläche (16b) aufweist, wobei die äußere Dichtung (11c) eine in einem dritten Radius (r₃) um die Drehachse (x) angeordnete dritte Dichtfläche (16a) aufweist, und wobei der erste Radius (r₁) kleiner ist als der zweite Radius (r₂) und/oder der dritte Radius (r₃), **dadurch gekennzeichnet, dass** die äußere Dichtung (11c) als Gleitringdichtung mit einem ersten Gleitring (17a) und einem zweiten Gleitring (17b) ausgebildet ist, wobei der erste Gleitring (17a) fest mit der Welle verbunden ist und wobei der zweite Gleitring (17b) in Richtung der Drehachse (x) längsverschieblich an dem Gehäuse (2) gehalten ist, dass zwischen dem zweiten Gleitring (17b) und dem Gehäuse (2) zur Abdichtung ein Dichtelement (17c) vorgesehen ist, welches an einer zugeordneten Anlagefläche (17d) des Gehäuses (2) sowie einem rückwärtigen Ende des zweiten Gleitrings (17b) anliegt, dass sich die Anlagefläche (17d) zylindersymmetrisch um die Drehachse (x) in dem dritten Radius (r₃) erstreckt und dass der zweite Radius (r₂) größer ist als der dritte Radius (r₃).

2. Turbomaschine (1) nach Anspruch 1, **dadurch gekennzeichnet, dass** die Zwischenkammer (1a) durch eine Druckausgleichsleitung (18) mit der Niederdruckseite (9) verbunden ist.

3. Turbomaschine nach einem der Ansprüche 1 bis 2, **dadurch gekennzeichnet, dass** in der Spülkammer (11c) gegenüber der Zwischenkammer (14) ein Überdruck, insbesondere von zumindest 0,5 bar, herrscht.

4. Turbomaschine (1) nach einem der Ansprüche 1 bis 3, **dadurch gekennzeichnet, dass** der Überdruck im Betrieb einstellbar ist.

5. Turbomaschine (1) nach einem der Ansprüche 1 bis 4, **dadurch gekennzeichnet, dass** der Rotor (3) eine Welle (3c) und ein mit der Welle (3a) verbundenes und die Turbostufe (6) bildendes Turbolaufrad (7) umfasst.

6. Turbomaschine (1) nach Anspruch 5, **dadurch gekennzeichnet, dass** das Turbolaufrad (7) als Radiallaufrad ausgebildet ist.

7. Turbomaschine (1) nach einem der Ansprüche 1 bis 6, **dadurch gekennzeichnet, dass** die Spülkammer (11a) an eine Spülgasleitung (11d) angeschlossen ist.

8. Verfahren zum Betrieb einer Turbomaschine (1) nach einem der Ansprüche 1 bis 7, wobei die Spülkammer (11a) mit einem Spülgasstrom beaufschlagt wird, sodass sich zu der Zwischenkammer (14) ein Überdruck von zumindest 0,5 bar einstellt.

9. Verfahren nach Anspruch 8, **dadurch gekennzeichnet, dass** der Überdruck der Spülkammer (11c) zum axialen Lastausgleich eingestellt wird.

10. Verfahren nach Anspruch 8 oder 9, **dadurch gekennzeichnet, dass** der Innendruck der Zwischenkammer (14) an das Niveau der Niederdruckseite (8) angeglichen wird.

## Claims

1. A turbomachine (1) with a housing (2) and a rotor (3) rotatably mounted around a rotary axis (x) in the housing (2), which comprises a turbo stage (6, 6') with a high-pressure side (9) and a low-pressure side (8), with a dry gas seal (11) arranged between the high-pressure side (9) and a housing interior (10), which comprises a purge chamber (11a) with an inner seal (11b) facing the high-pressure side (9) and an outer seal (11c) facing away from the high-pressure side (9), with an intermediate chamber (14) arranged between the dry gas seal (11) and the high-pressure side (9), which is separated from the high-pressure side (9) by an intermediate seal (15), wherein the intermediate seal (15) comprises a first sealing surface (16a) arranged in a first radius (r₁) around the axis of rotation (x), wherein the inner seal (11b) comprises a second sealing surface (16b) arranged in a second radius (r₂) around the axis of rotation (x), wherein the outer seal (11c) comprises a third sealing surface (16a) arranged in a third radius (r₃) around the axis of rotation (x), and wherein the first radius (r₁) is smaller than the second radius (r₂) and/or the third radius (r₃), **characterized in that** the outer seal (11c) is designed as a mechanical seal with a first sliding ring (17a) and a second sliding ring (17b), wherein the first sliding ring (17a) is firmly connected to the shaft and wherein the second sliding ring (17b) in the direction of the axis of rotation (x) is longitudinally slidably held on the housing (2), that, between the second sliding ring (17b) and the housing (2), a seal element (17c) is provided for sealing, which is attached to an associated contact surface (17d) of the housing (2) and a rear end of the second sliding ring (17b), that the contact surface (17d) extends around the axis of rotation (x) in the third radius (r₃) in a cylindrically symmetric manner, and that the second radius (r₂) is greater than the third radius (r₃).

2. The turbomachine (1) according to Claim 1, **characterized in that** the intermediate chamber (1 a) is connected to the low-pressure side (9) via a pressure compensation line (18).

3. The turbomachine according to any one of the Claims 1 to 2, **characterized in that** in the purge chamber (11c), an overpressure, in particular, of at least 0.5 bar, prevails with relation to the intermediate chamber (14) .

4. The turbomachine (1) according to any one of the Claims 1 to 3, **characterized in that** the overpressure is adjustable during operation.

5. The turbomachine (1) according to any one of the Claims 1 to 4, **characterized in that** the rotor (3) comprises a shaft (3c) and a turbo impeller (7) connected to the shaft (3a), thereby forming the turbo stage (6).

6. The turbomachine (1) according to Claim 5, **characterized in that** the turbo impeller (7) is designed as a radial impeller.

7. The turbomachine (1) according to any one of the Claims 1 to 6, **characterized in that** the purge chamber (11a) is connected to a purge gas line (11d).

8. A method for operating a turbomachine (1) according to any one of the Claims 1 to 7, wherein a purge gas stream is applied to the purge chamber (11a) so that an overpressure of at least 0.5 bar is applied to the intermediate chamber (14).

9. The method according to Claim 8, **characterized in that** the overpressure of the purge chamber (11c) is adjusted for axial load balancing.

10. The method according to Claim 8 or 9, **characterized in that** the internal pressure of the intermediate chamber (14) is compensated to the level of the low-pressure side (8).

## Revendications

1. Turbomachine (1) comportant un carter (2) et un rotor (3) positionné rotativement autour d'un axe de rotation (x), qui comprend un étage turbo (6, 6') avec un côté haute pression (9) et un côté basse pression (8), avec un joint à gaz sec (11) disposé entre le côté haute pression (9) et un intérieur de carter (10), qui présente une chambre de rinçage (11a) avec un joint intérieur (11b) tourné vers le côté haute pression (9) et un joint extérieur (11c) tourné à l'opposé du côté haute pression (9), avec une chambre intermédiaire (14) disposée entre le joint à gaz sec (11) et le côté haute pression (9), qui est séparé du côté haute pression (9) par un joint intermédiaire (15), dans laquelle le joint intermédiaire (15) présente une première surface d'étanchéité (16a) disposée autour de l'axe de rotation (x) en définissant un premier rayon (r₁), dans laquelle le joint intérieur (11b) présente une deuxième surface d'étanchéité (16b) disposée à un deuxième rayon (r₂) autour de l'axe de rotation (x), dans laquelle le joint extérieur (11c) présente une troisième surface d'étanchéité (16a) disposée à un troisième rayon (r₃) autour de l'axe de rotation (x), et dans laquelle le premier rayon (r₁) est inférieur au deuxième rayon (r₂) et/ou au troisième rayon (r₃), **caractérisé en ce que** le joint extérieur (11c) est conçu comme une garniture mécanique comportant un premier anneau coulissant (17a) et un deuxième anneau coulissant (17b), dans laquelle le premier anneau coulissant (17a) est solidaire de l'arbre et le deuxième anneau coulissant (17b) est maintenu sur le carter (2) de manière déplaçable longitudinalement dans la direction de l'axe de rotation (x), **en ce qu'**un élément d'étanchéité (17c) est prévu entre la deuxième bague coulissante (17b) et le carter (2) à des fins d'étanchéité, lequel élément d'étanchéité (17c) est prévu sur une surface de contact associée (17d) du carter (2) et une extrémité arrière de la deuxième bague coulissante (17b) de sorte que la surface de contact (17d) s'étende de manière cylindrique symétriquement autour de l'axe de rotation (x) dans le troisième rayon (r₃) et que le deuxième rayon (r₂) soit supérieur au troisième rayon (r₃).

2. Turbomachine (1) selon la revendication 1, **caractérisée en ce que** la chambre intermédiaire (la) est reliée au côté basse pression (9) par une ligne d'équilibrage de pression (18).

3. Turbomachine selon une des revendications 1 à 2, **caractérisée en ce que** dans la chambre de rinçage (11) une surpression prédomine par rapport à la chambre intermédiaire (14), notamment d'au moins 0,5 bar.

4. Turbomachine (1) selon une quelconque des revendications 1 à 3, **caractérisée en ce que** la surpression est réglable en fonctionnement.

5. Turbomachine (1) selon une des revendications 1 à 4, **caractérisée en ce que** le rotor (3) comprend un arbre (3c) et une roue de turbo (7) qui est reliée à l'arbre (3a) et forme l'étage de turbo (6).

6. Turbomachine (1) selon la revendication 5, **caractérisée en ce que** la roue de turbo (7) est réalisé sous la forme d'une roue radiale.

7. Turbomachine (1) selon une quelconque des revendications 1 à 6, **caractérisée en ce que** la chambre de rinçage (11a) est reliée à une conduite de gaz de rinçage (11d) .

8. Procédé de fonctionnement d'une turbomachine (1) selon une quelconque des revendications 1 à 7, dans lequel la chambre de rinçage (11a) est sollicitée avec un flux de gaz de rinçage, de sorte qu'une surpression d'au moins 0,5 bar s'établisse dans la chambre intermédiaire (14).

9. Procédé selon la revendication 8, **caractérisé en ce que** la surpression de la chambre de rinçage (11c) est réglée pour un équilibrage des charges axiales.

10. Procédé selon la revendication 8 ou 9, **caractérisé en ce que** la pression interne de la chambre intermédiaire (14) est ajustée au niveau du côté basse pression (8).
